# EUROPÄISCHE PATENTSCHRIFT

(11) **EP 1 649 214 B1**
(45) Veröffentlichungstag und Bekanntmachung des Hinweises auf die Patenterteilung: **19.09.2007**
(21) Anmeldenummer: 04763156.9
(22) Anmeldetag: 10.07.2004
(51) Int. Cl.: F21V 31/00, F21V 17/16

(54) **LEUCHTE**
LIGHT
LAMPE

(30) Priorität: 25.07.2003 DE 10333980
(43) Veröffentlichungstag der Anmeldung: 26.04.2006
(73) Patentinhaber: IBV Holding GmbH, 49084 Osnabrück (DE)
(72) Erfinder: VONHOFF, Jürgen, 49076 Osnabrück (DE)
(74) Vertreter: Bünemann, Egon
(86) Internationale Anmeldenummer: PCT/EP2004/007619
(87) Internationale Veröffentlichungsnummer: WO 2005/015082

(56) Entgegenhaltungen:
- EP-A- 0 179 453
- EP-A- 0 829 677
- GB-A- 2 322 441

## Beschreibung

Die Erfindung betrifft eine Leuchte nach dem Oberbegriff des Anspruchs 1. Leuchten mit Gasentladungslampen sind im allgemeinen besonders wirtschaftliche Lichtquellen, die langlebig und mit hoher Lichtausbeute in Bezug auf die aufzuwendende elektrische Leistung betrieben werden können. Insbesondere in gewerblichen Bereichen und in häuslichen Nebenräumen werden solche Lampen breithin eingesetzt, wo gewisse Mängel von der Spektralverteilung des Lichts und insbesondere von der Länge und Form der Lampen her Einschränkungen hinsichtlich einer dekorativen Leuchtengestaltung ergeben aber weniger ins Gewicht fallen als etwa im Wohnbereich. Leuchten in gewerblichen Bereichen, in Kellern oder Garagen unterliegen sehr oft auch Anforderungen an eine zumindest wassergeschützte Ausführung und sind dabei regelmäßig durchentwickelte und preislich scharf kalkulierte Großserienerzeugnisse.

Bekannte Leuchten dieser Art weisen ein aus einem hochtransparenten Oberteil und aus einem undurchsichtigen Unterteil bestehendes Lampengehäuse auf. In dieser Aufteilung kann dann das undurchsichtige Unterteil aus einer Kunstharzschale gebildet werden, die die von den Lampen insbesondere im Bereich der endseitigen Elektroden ausgehende Wärme und vor allem die Wärme eines innerhalb der Lampe angeordneten Vorschaltgeräts (Drossel) aufnimmt, während das Oberteil aus einem hochtransparenten thermoplastischen Kunststoffmaterial hergestellt ist, welches die gewünschte Lichtabstrahlung Abkapselung ermöglicht, allerdings eine gegenüber dem duroplastischen Unterteilmaterial sehr viel geringere Temperaturfestigkeit und eine sehr viel größere Wärmedehnung aufweist.

Die aus der Praxis geläufigen und auch hier verwandten Begriffe "Oberteil" und "Unterteil" beziehen sich nicht auf die jeweilige Einbaulage, vielmehr wird mit Unter teil der an einer Wand oder Decke festzulegende Gehäusekörper bezeichnet, der im allgemeinen auch die elektrische Einrichtung haltert, während mit "Oberteil" eine vom Unterteil lösbar gehaltene Abdeckung bezeichnet wird. Somit kann, wie etwa bei einer Deckenmontage, das Oberteil zuunterst liegen.

Das herkömmlich gegenüber thermischen und mechanischen Belastungen festere Unterteil aus nicht durchscheinendem duroplastischen Material absorbiert allerdings einen erheblichen Teil des Lichts, das von der Lampe oder den Lampen innerhalb des Gehäuses abgestrahlt wird. Überdies ist die Lichtverteilung unbefriedigend, wenn auf der Seite des Unterteils große Schattenbereiche auftreten. Bei einer Decken- oder Wandmontage ergeben sich dann vor allem in den an die Leuchte angrenzenden Bereichen dunkle Schattenzonen mit einem unerwünschten Leuchtbild.

Darüber hinaus ist bereits versucht worden, Wannenleuchten dieser Art mit einem transparenten Unterteil aus einem gleichen oder ähnlichen Material wie das Oberteil herzustellen. Es zeigte sich jedoch, daß Schwankungen in den Materialeigenschaften zu Montage- und Abdichtungsproblemen führten, die jedenfalls nicht mit marktgerechtem Aufwand zu beherrschen wären.

Die EP 0 829 677 A1 beschreibt eine Feuchtraumleuchte, bei der das Oberteil und das Unterteil aus dem gleichen lichtdurchlässigen thermoplastischen Material mit dem gleichen Formwerkzeug gemeinsam hergestellt werden. Zur Verbindung von Oberteil und Unterteil ist neben einem dünnwandigen Verbindungssteg an einer Längsseite eine Verrastung vorgesehen, bei der das Unterteil in das Oberteil eingreift, wobei in der Eingriffsstellung eine Wulst die Verrastung hält. Diese Verbindung ist jedoch hinsichtlich ihrer Dichtigkeit und Robustheit unzulänglich.

Aufgabe der Erfindung ist es dementsprechend, eine Leuchte der hier betrachteten Art zu schaffen, die eine verbesserte Lichtabstrahlung und Lichtverteilung ermöglicht, ohne dabei die bei diesen Lampen weiterentwickelten Standards in Bezug auf deren Zuverlässigkeit und Robustheit, einfache Montage und Handhabung und insbesondere kostengünstige Herstellung preiszugeben.

Gemäß der Erfindung wird diese Aufgabe von einer Leuchte nach dem Oberbegriff des Anspruchs 1 ausgehend mit den kennzeichnenden Merkmalen des Anspruchs 1 gelöst. Die verbesserte Lichtverteilung und Lichtabstrahlung ist schon dadurch zu erreichen, daß das Unterteil gleichfalls aus einem durchscheinenden bzw. hochtransparenten Material hergestellt ist. Die Lichtverteilung wird also nicht vom Unterteil abgeschirmt, sondern auch großenteils freigegeben. Damit werden auch bei einer Wand- oder Deckenmontage Dunkelzonen als Umrandung einer solchen Leuchte vermieden und jedenfalls bei hellen Wänden oder Decken auch dort auftreffenden Lichtströme mit Reflektion in den Raum hinein nutzbar.

Die besondere thermische Empfindlichkeit des transparenten thermoplastischem Materials verlangt allerdings besondere Vorkehrungen gegen Verformungen. Vor allem ist ohne herstellungsbedingt teuere, komplizierte und schwer zu handhabende Konstruktionen sicherzustellen, daß die Dichtigkeit des Gehäuses in Bezug auf den Wasserschutz nicht mit einer Erwärmung und der temperaturbedingt hohen Ausdehnung des Materials verloren geht.

In dieser Hinsicht hat es sich als durchschlagend herausgestellt, das Unterteil aus chargengleichem thermoplastischem Kunststoffmaterial herzustellen wie das Oberteil. Diese Vorgabe ist dann allerdings nicht schon damit zu erfüllen, daß das Material in beiden Fällen die gleiche Benennung aufweist. Nominell übereinstimmende Materialien gleicher Hersteller oder sogar verschiedene Chargen des gleichen Herstellers können zu einer unzulänglichen Übereinstimmung führen. Zweckmäßig ist es sogar, beim Ausgangsmaterial nicht allein auf die gleiche Charge und damit deren Homogenität zu setzen, sondern darüber hinaus vom Ausgangsmaterial und den Arbeitsbedingungen übereinstimmend zu arbeiten. So wird zweckmäßig vorgesehen, Oberteil und Unterteil in einem gemeinsamen Spritzgießvorgang aus derselben Spritzgießmaschine heraus zu formen oder sogar eine einzige Spritzgußform gemeinsam mit einer Kavität für das Unterteil und einer Kavität für das Oberteil mit weitgehend symmetrischen bzw. in der Länge übereinstimmenden Einspritzkanälen auszulegen.

Mit einem derart fein abgestimmten gleichen Material ergeben sich auch bei hoher Wärmedehnung verschiebungsfreie homogene Veränderungen, die ein Auseinanderklaffen und entsprechende Undichtigkeiten zwischen Oberteil und Unterteil vermeiden.

Weitere Ausgestaltungen der Erfindung ergeben sich anhand der Ansprüche. In der nachfolgenden Beschreibung eines Ausführungsbeispiels werden diese und deren Vorteile erläutert. In der Zeichnung zeigen:
- Fig. 1: Querschnitt durch eine Leuchte (hinsichtlich des Steckrands nicht erfindungsgemäß)
- Fig. 2: Teil-Längsschnitt nach Linie II-II in Fig. 1.
- Fig. 3: Querschnitt durch eine abgewandelte Form einer Leuchte.

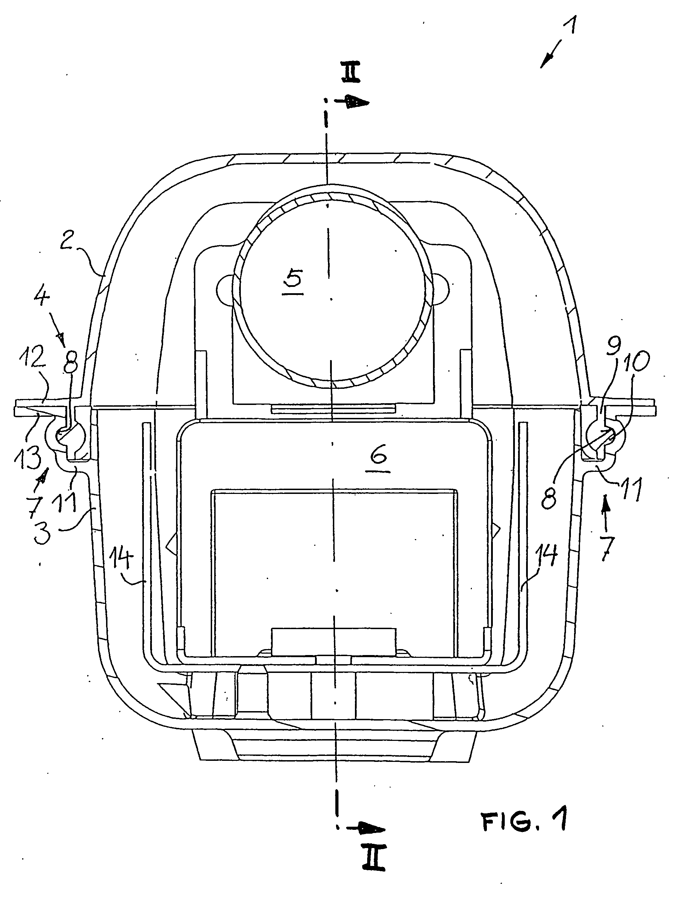

Eine insgesamt mit 1 bezeichnete Leuchte weist ein aus einem Oberteil 2 und einem Unterteil 3 zusammengesetztes, insgesamt mit 4 bezeichnetes Gehäuse auf, welches angepaßt an eine innenliegende Gasentladungslampe 5 langgestreckter Röhrenform etwa prismatisch langgestreckt in Blickrichtung der Fig. 1 verläuft und an den Enden kappenförmig abschließt. Das Oberteil 2 besteht in bekannter Weise aus einem transparenten thermoplastischem Kunststoff wie etwa einem Acrylglas (PMMA) oder einem transparenten Polykarbonat. Das Unterteil 3 besteht in neuer Weise aus dem gleichen Material, wobei sich die Übereinstimmung nicht nur hinsichtlich des Grundmaterials und seiner Additive und ggf. der Bezugsquelle ergibt, sondern darüber hinaus hinsichtlich der Liefercharge, des Lager- und Temperaturzustandes und des Verarbeitungsvorgangs, insbesondere Extrusionsvorgangs.

Diese Übereinstimmung wird zweckmäßig dadurch erzeugt, daß das thermoplastische Material gleichzeitig bei einem gemeinsamen Einspritzvorgang in eine Spritzgußform bzw. Kavität für das Oberteil 2 und in eine Spritzgußform bzw. Kavität für das Unterteil 3 eingespritzt wird. Die Angleichung wird weiter dadurch gefördert, daß eine einzige Spritzgußform sowohl eine Kavität für ein Oberteil 2 wie auch eine Kavität für ein Unterteil 3 enthält, wobei auch die Einspritzwege und Einspritzkanäle aneinander angeglichen sind. Die Grundvorstellung von einer solchen, fast zwillingsartigen Spritzgußformung komplementärer Gehäuseschalenteile läßt natürlich auch Vervielfachung zu, bei der gleichzeitig mehrere Ober- und Unterteile in einer Form gespritzt werden, allerdings stehen der Verfielfachung praktische Begrenzungen mit der Größe der Spritzgußformen und den dabei aufzubringen Schließkräften entgegen. Die langgestreckten und damit schon recht großen Gehäuseteile werden bei geläufiger Technik mit einem Einzelpaar von Ober- und Unterteil ausgefüllt.

Damit ergibt sich jedenfalls ein Spritzgießvorgang, bei dem die Spritzgießmaschine über ihr Spritzgießmundstück ein einheitliches spritzfähiges Material in eine Form einbringt, in der es sich weitestgehend symmetrisch und bei ausgeglichener Temperatur innerhalb der Spritzgußform auf die nebeneinanderliegenden Kavitäten verteilt.

Der besondere Zweck dieser Form- und Verfahrensgestaltung liegt darin, das Gehäuse in seinem Temperaturverhalten und insbesondere in seiner Temperaturdehnung bestmöglich zwischen Ober- und Unterteil abzugleichen. Das Gehäuse 4 unterliegt thermischen Belastungen von außen durch wechselnde Temperaturen der Umgebungsluft, ggf. auch Sonneineinstrahlung oder Niederschlag, vor allem aber erfährt es thermische Belastungen, die durch die Wärmeentwicklung der Gasentladungslampe 5 vorwiegend im Bereich der endseitigen Elektroden und auch eines Vorschaltgeräts 6, welches gleichfalls durch das Gehäuse 4 abgedeckt und geschützt sein soll und nur im Idealfall die Wirkung einer verlustlosen Drossel (Induktionsspule) hätte, aus Gründen der Baugröße und der Herstellungskosten aber doch elektrische Verluste erzeugt, die zu einer Temperatur bis über 200°C führen kann.

Während herkömmliche Gehäuse für Gasentladungslampen mit einem Unterteil aus einem thermisch robusten duroplastischem Kunststoff ausgestattet wurden, der mit hoher Temperaturfestigkeit und geringer Wärmedehnung die thermischen Belastungen auffängt, ist der erfindungsgemäß eingesetzte transparente thermoplastische Kunststoff sehr viel anfälliger. Die Lösung des Problems liegt hier also nicht in einem robusteren Unterteil, sondern in der Angleichung von Oberteil und Unterteil, um Wärmedehnungen, wenn sie materialbedingt nicht gering zu halten sind, aufeinander abzustimmen und damit Verspannungen und Verwerfungen des Gehäuses auszuschließen.

Das Gehäuse erhält damit auch eine Transparenz des Unterteils 3, so daß das in dessen Bereich von der Gasentladungslampe 5 abgestrahlte Licht heraustritt, Schattenbildungen um das Unterteil 3 herum vermeidet und bei einer Wand- oder Deckenmontage durch Reflektion zusätzliches Licht in den Raum hineinbringt, wobei das Gehäuse auch insgesamt vorteilhaft hell erscheint.

Es versteht sich, daß statt der einzelnen Gasentladungslampe 5 in durchaus gebräuchlicher Weise auch zwei oder mehrere Gasentladungslampen in einem Gehäuse angeordnet sein könnten, ohne daß sich insoweit etwas anderes ergäbe.

Im Hinblick auf die vorstehend betrachteten, insbesondere thermischen Belastungen des Gehäuses kommt dem Verbindungsbereich zwischen Oberteil 2 und Unterteil 3 eine Schlüsselrolle zu, wobei sowohl die bei derartigen Massenprodukten mit scharfem Preiswettbewerb vorauszusetzende unaufwendige Fertigung wie auch eine unkomplizierte Handhabung durch den Installateur bzw. Käufer vorzusehen ist. Demgemäß ist für die Verbindung von Ober- und Unterteil eine Verrastung 7 geschaffen, bei der auf der einen Seite, nämlich hier auf seiten des Unterteils 3, eine Dichtungsnut 8 eingeformt ist. Die Dichtungsnut ist in einer Querrichtung zu einer Schließbewegung des Oberteils 2 zum Unterteil 3 hin offen und wird von einem Steckrand 9 des Oberteils überlappt, der seinerseits einen in die Ringnut passenden Ringwulst 10, nach außen vorstehend, aufweist. Diese an sich typische Verrastung wird im Sinne eines verbesserten Wasserschutzes dadurch ergänzt, daß der Steckrand 9 (des Oberteils 2) in eine randseitig umlaufende, im Querschnitt U-förmige Aufnahme 11 für den Steckrand 9 eingearbeitet ist, die den Steckrand 9 umgreift und abdeckt. Mechanische Beanspruchungen des Gehäuses 4, etwa bei einem Wassertest, insbesondere in Verbindung mit thermischen Gehäusebelastungen, führen also nicht zu einem im Sinne des Spritzwasserschutzes gefährlichen Auseinanderklaffen von Oberteil 2 und Unterteil 3.

Der bereits mit der Spritzgußformung des Oberteils 2 ausgebildete Ringwulst 10 bietet den einfachsten und preisgünstigsten Rasteingriff dar. Es versteht sich, daß der Steckrand 9 im Querschnitt aber ebenfalls mit einer Dichtungsnut versehen werden kann, die der Dichtungsnut 8 entspricht und gegenüberliegt, so daß ein im Querschnitt kreisförmiger Zwischenraum verbleibt, in den eine umlaufende elastische Ringdichtung einzulegen ist. Dies wird insbesondere bei Materialien vorzusehen sein, die sich für eine Verrastung als zu fest oder zu starr herausstellen.

In Fig. 1 sind beidseitig im Anschlußbereich zwischen Oberteil 2 und Unterteil 3 Grifffahnen 12,13 in einstückiger Anformung mit dem Oberteil 2 bzw. dem Unterteil 3 zu sehen. Diese sind in Blickrichtung und damit in Längsrichtung des Gehäuses 4 gegeneinander gerade so weit versetzt, daß sie einander nicht überlappen. Sie ermöglichen es, die Gehäuseteile mit den Fingern (also ohne Werkzeug) aus der Raststellung herauszulösen.

Wie in Fig. 1 weiter zu erkennen ist, wird das Vorschaltgerät 6 durch ein Abschirmelement 14 gegenüber dem Unterteil 3 abgeschirmt. Es handelt sich um ein Blech in U-Abwinklung, welches unterseitig zwischen Vorschaltgerät 6 und im unteren Bereich des Unterteils 3 ausgebildeten Sockelfortsätzen festliegt, seitlich aber im Abstand von dem Vorschaltgerät 6 etwa bis zu dessen Höhe hochgeführt ist, um Strahlungswärme und auch Konvektion zum Unterteil 3 hin so gut wie möglich abzufangen.

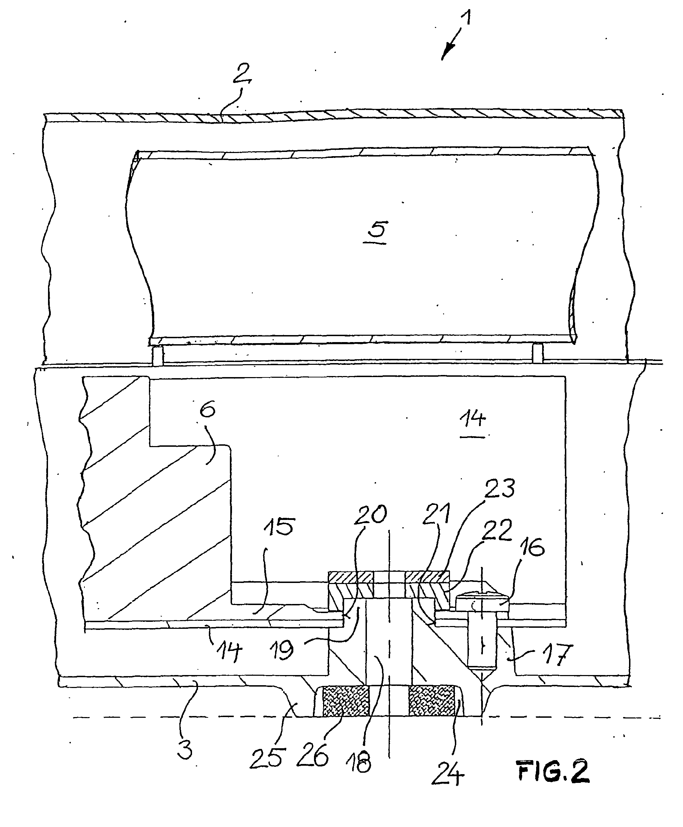

Im Längsschnitt gemäß Fig. 2 ist nur ein kleiner Teil der gesamten Leuchtenlänge ausschnittsweise dargestellt, wobei insbesondere das Vorschaltgerät 6 mit einem zu Montagezwecken überstehenden Bodenteil 15 und das gleichfalls in Längsrichtung über das Vorschaltgerät 6 hinausstehende Abschirmelement 14 zu erkennen sind. Beide sind in der Vormontage für den Transport, etwa mit einer Schraube 16, an einem Sockelbereich 17 des Unterteils 3 festgelegt.

Dieser Sockelbereich 17 besitzt eine vertikale Durchführungsöffnung 18, die nach oben in einem Fortsatz 19 ausmündet, der ein Montageloch 20 des Vorschaltgeräts 6 bzw. des Bodenteils 15 und ein Montageloch 21 des Abschirmelements 14 isolierend durchgreift. Eine Isolierscheibe 22 und eine vorzugsweise metallische Ringscheibe 23 sind dazu vorgesehen, bei der Montage der Leuchte 1 an einer Wand oder Decke mit einer Schraube oder einem vergleichbaren Befestigungsmittel, nach außen durchgesetzt, die Leuchte an einer Unterlagen festzuschrauben. Damit wird auch das Vorschaltgerät als kritisches Element mit seinem besonderen Gewicht und seiner Wärmeentwicklung auf kurzem Wege gegenüber einer bauseitigen Unterlagen festgelegt. Die schalenförmig ausgebildete Isolierscheibe 22 ermöglicht einen Andruck des Befestigungsmittels gegen den Bodenteil 15 des Vorschaltgeräts ungeachtet eines Überstands des Fortsatzes 19.

Eine generell vorzusehende Abdichtung der Montageöffnung kann grundsätzlich innen im Bereich der Durchführungsöffnung 18 oder der Isolierscheibe 22 erfolgen. Im vorliegenden Fall ist unterseitig und damit außenseitig eine Aufnahme 24 in einem Fußbereich 25 des Unterteils 3 vorgesehen, in die eine Dichtungsscheibe 26 einzulegen ist.

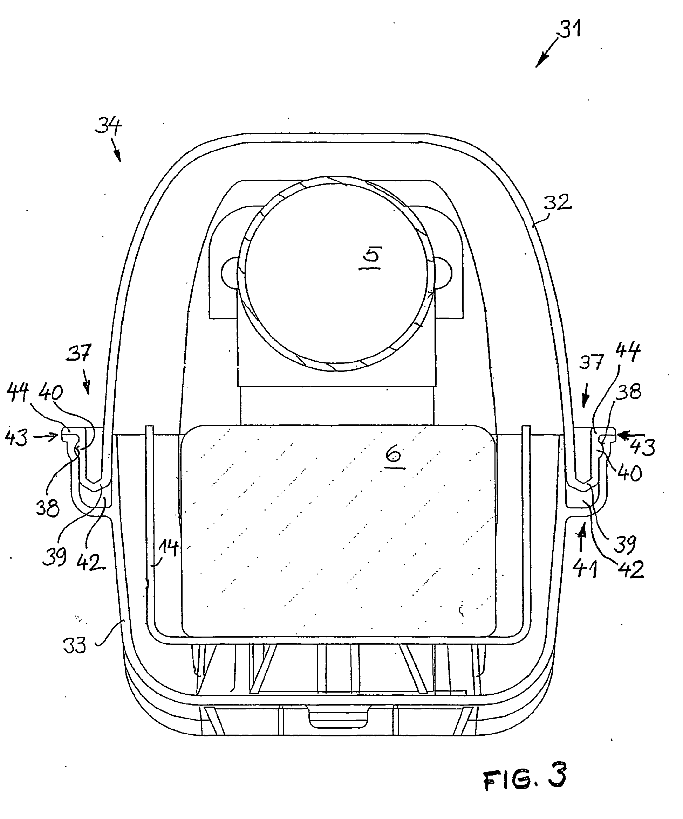

Eine abgewandelte Ausführungsform der Leuchte gemäß Fig. 3 ist insgesamt mit 31 bezeichnet und weist wiederum ein Gehäuse 34 aus einem Oberteil 32 und einem Unterteil 33 auf, wobei ein markanter Unterschied zur vorbetrachteten Leuchte 1 darin besteht, daß zu einer Verrastung 37 ein Steckrand 39 vorgesehen ist, der im Querschnitt als U-Profil ausgebildet ist. Dieser Steckrand 39 ist wie der Steckrand 9 bei der Leuchte 1 dazu vorgesehen, bei einer Schließbewegung zwischen Oberteil 32 und Unterteil 33 in eine U-förmige Aufnahme 41 an dem dem Oberteil 32 zugewandten Rand des Unterteils 33 einzudringen und sich dort in einer seitlichen Dichtungsnut 38 mit einem passenden Ringwulst 40 zu verrasten. Die Ausgestaltung des Steckrandes 39 als offenes Hohlprofil schafft eine Elastizität in Querrichtung und damit einen federelastischen Andruck des Ringwulstes 40 in die Ringnut 38 hinein, ohne daß diese Andruckkräfte das Einstecken bzw. das Auseinandernehmen von Oberteil 32 und Unterteil 33 behindern. Im Sinne vorgegebener Andruckkräfte kann dabei eine Vorspannung konstruktiv vorgesehen sein, indem der Steckrand 39 im Bereich des Ringwulstes 40 breiter ausgebildet ist als die Aufnahme 41 im Bereich der Dichtungsnut 38. Beim Zusammenstecken von Oberteil 32 und Unterteil 33 wird also der Steckrand 39 um ein vorgegebenes Maß elastisch zusammengedrückt und/oder die Aufnahme 41 im Querschnitt elastisch auseinandergespreizt. Dies verbessert den Dichtungssitz im Verrastungsbereich.

Von Interesse ist aber auch ein kanalartiger freier Zwischenraum 42 zwischen Steckrand 39 und Aufnahme 41. Die Aufnahme 41 ist also im Querschnitt nicht so gestaltet, daß sie den Steckrand 39 eng umschließt, sondern einen freien Raum beläßt. Dieser Zwischenraum (42) hat sich bei Spritzwassertestes als geschlossener Raum bewährt, kleine Mengen Wassers, das ggf. noch bei hohem Wasserstahldruck von außen die Dichtung zwischen Ringwulst 40 und Dichtungsnut 38 durchdringt, vor dem Gehäuseinneren abzufangen. Dabei hindert eine hinreichend dichte flächige Anlage zwischen den überlappenden Fortsetzungen des Gehäuseoberteils 32 und des Gehäuseunterteils 33 ein Einlaufen von Wasser, aus dem Zwischenraum 42 in das Innere des Lampengehäuses 34. Auf der anderen Seite ist die Steckverbindung zwischen Oberteil 32 und Unterteil 33 nicht als hermetisch dicht zu betrachten, so daß Feuchtigkeitseinflüsse geringer Art durch Diffusionsbewegungen und Ausgleichsbewegungen bei Wärme- und Druckschwankungen ins Freie gelangen.

Vorteilhaft für die Versteifung wie auch die Dichtigkeit der Verrastung 37 ist eine enge Anlage zwischen Steckrand 39 und Aufnahme 41 mit einem im Querschitt gekrümmten Verlauf eines äußeren Zwischenspalts 43. Dieser hindert Spritzwasser auch bei scharfem Strahl an einem Durchtritt zum Dichtungsbereich zwischen Dichtungsnut 38 und Ringwulst 40 und deckt diesen Bereich mit einem Endflansch 44 ab, der gleichzeitig zur Formsteifigkeit des Steckrand-Profils in Längsrichtung beiträgt.

## Patentansprüche

1. Leuchte (1,31), insbesondere spritzwassergeschützte Wand- oder Deckenleuchte, zur Aufnahme von zumindest einer langgestreckten Gasentladungslampe (5), mit einem aus einem ortsfest montierbaren und elektrische Einrichtungen haltenden transparenten Unterteil (3,33) und einem transparenten Oberteil (2,32) geschlossen zusammensetzbaren Gehäuse (4,34), wobei das Unterteil (3,33) und das Oberteil (2,32) aus den gleichen Chargen thermoplastischen Kunststoffmaterials hergestellt sind und sich längs beiderseitig umlaufender Ränder überlappen, **dadurch gekennzeichnet, daß** ein Rand als Steckrand (39) und der andere Rand als Aufnahme (11,41) für den Steckrand (39) ausgebildet ist, wobei der Steckrand (39) im Querschnitt mit einem offenen Hohlprofil ausgestattet ist.

2. Leuchte nach Anspruch 1, **dadurch gekennzeichnet, daß** Oberteil (2,32) und Unterteil (3,33) als Spritzgußteil in einem Spritzgießvorgang hergestellt sind.

3. Leuchte nach Anspruch 2, **dadurch gekennzeichnet, daß** Oberteil (2,32) und Unterteil (33) in einer gemeinsamen, im wesentlichen bezüglich des Einspritzvorgangs symmetrisch ausgelegten Form gespritzt sind.

4. Leuchte nach einem der Ansprüche 1 bis 3, **dadurch gekennzeichnet, daß** von Oberteil (2,32) und Unterteil (3,33) zumindest eines mit einer Dichtungsnut (8,38) versehen ist.

5. Leuchte nach Anspruch 4, **dadurch gekennzeichnet, daß** das nicht mit der Dichtungsnut (8,38) versehene Unterteil (3,33) bzw. Oberteil (2,32) mit einem formschlüssig in die Dichtungsnut einrastenden Dichtungswulst (10,40) ausgeformt ist.

6. Leuchte nach Anspruch 4, **dadurch gekennzeichnet, daß** sowohl Unterteil (3,33) wie Oberteil (2,32) mit einer Dichtungsnut zur Aufnahme einer gemeinsamen Ringdichtung ausgestattet sind.

7. Leuchte nach einem der Ansprüche 1 bis 6, **dadurch gekennzeichnet, daß** die Aufnahme (11,41) U-förmig ausgebildet ist und an einem außenliegenden U-Schenkel mit der Dichtungsnut (8,38) versehen ist.

8. Leuchte nach Anspruch 7, **dadurch gekennzeichnet daß** der Steckrand (39) und die Aufnahme (41) unter elastischer Spannung ineinandergreifen.

9. Leuchte nach Anspruch 7 oder 8, **dadurch gekennzeichnet, daß** die Aufnahme (41) einen vom Steckrand (39) zum Innenraum der Leuchte und nach außen abgeschlossenen Zwischenraum (42) aufweist.

10. Leuchte nach einem der Ansprüche 1 bis 9, **dadurch gekennzeichnet, daß** das Oberteil (2) und das Unterteil (3) jeweils zumindest eine Grifffahne (12,13) aufweisen, wobei die beiden Grifffahnen (12,13) benachbart aber ohne Überlappung in Längsrichtung versetzt an den Rändern (7) angeordnet sind.

11. Leuchte nach einem der Ansprüche 1 bis 10 mit einem innerhalb des Gehäuses angeordneten Vorschaltgerät (6), **dadurch gekennzeichnet, daß** das Vorschaltgerät durch ein Abschirmelement (14) zum Gehäuse (4) hin abgeschirmt ist.

12. Leuchte nach Anspruch 11, **dadurch gekennzeichnet, daß** das Abschirmelement (14) aus einem Blechteil besteht.

13. Leuchte nach einem der Ansprüche 1 bis 12 mit einem am Unterteil festgelegten Vorschaltgerät (6), **dadurch gekennzeichnet, daß** das Vorschaltgerät (6) ein Montageloch (20) für die Durchführung einer Schraube oder eines sonstigen Befestigungselements nach außen zur Anbringung der Leuchte an einer Wand oder Decke aufweist.

14. Leuchte nach Anspruch 13 und Anspruch 11 oder 12, **dadurch gekennzeichnet, daß** das Abschirmelement (14) gleichfalls ein Montageloch (21) in fluchtender Ausrichtung mit dem Montageloch (20) des Vorschaltgeräts (6) aufweist.

15. Leuchte nach Anspruch 13 oder 14, **dadurch gekennzeichnet, daß** das Unterteil in Ausrichtung auf das Montageloch (20) eine vorgeformte Durchführungsöffnung (18) sowie eine Aufnahme (24) für ein Dichtungselement (26) aufweist.

16. Leuchte nach einem der Ansprüche 1 bis 15, **dadurch gekennzeichnet, daß** das Gehäuse (4) aus einem Acrylglas (PMMA) oder einem transparenten Polycarbonat besteht.

## Claims

1. Luminaire (1, 31), in particularly a splashproof wall or ceiling luminaire, for receiving at least one elongated gas-discharge lamp (5), having a housing (4, 34) which is able to be assembled into a closed form from a transparent bottom part (3, 33), which is able to be fitted in a fixed position and which holds items of electrical gear, and from a transparent top part (2, 32), the bottom part (3, 33) and the top part (2,32) being made from the same batches of thermoplastic plastics material and overlapping along edges which, on both sides, extend round in a loop, **characterised in that** one edge takes the form of an insertable edge (39) and the other edge takes the form of a receptacle (11, 41) for the insertable edge, the insertable edge (39) being given an open, hollow profile in cross-section.

2. Luminaire according to claim 1, **characterised in that** the top part (2, 32) and bottom part (3, 33) are produced as injection mouldings in one injection moulding operation.

3. Luminaire according to claim 2, **characterised in that** the top part (2, 32) and bottom part (3, 33) are injection moulded in a shared mould which is of symmetrical layout with regard to the injection moulding operation.

4. Luminaire according to one of claims 1 to 3, **characterised in that**, of the top part (2, 32) and bottom part (3, 33), at least one is provided with a sealing groove (8, 38)

5. Luminaire according to claim 4, **characterised in that** whichever of the bottom part (3, 33) and top part (2, 32) is not provided with the sealing groove (8, 38) is moulded to have a sealing bead (10, 40) which latches positively into the sealing groove.

6. Luminaire according to claim 4, **characterised in that** both the bottom part (3, 33) and the top part (2, 32) are provided with a sealing groove to receive a shared ring seal.

7. Luminaire according to one of claims 1 to 6, **characterised in that** the receptacle (11, 41) is of a U-shaped form and is provided with a sealing groove (8, 38) in a side of the U which is situated on the outside.

8. Luminaire according to claim 7, **characterised in that** the insertable edge (39) and the receptacle (41) interengage under elastic loading.

9. Luminaire according to claim 7 or 8, **characterised in that** the receptacle (41) has an interstice (42) which is sealed off from the interior of the luminaire and from the outside by the insertable edge (39).

10. Luminaire according to one of claims 1 to 9, **characterised in that** the top part (2) and bottom part (3) each have at least one web for gripping (12, 13), the two webs for gripping (12, 13) being arranged on the edges (7) to be adjacent to one another but to be staggered in the longitudinal direction without any overlap.

11. Luminaire according to one of claims 1 to 10 having a ballast (6) arranged inside the housing, **characterised in that** the ballast is screened off from the housing (4) by a screening member (14).

12. Luminaire according to claim 11, **characterised in that** the screening member (14) comprises a sheet-metal part.

13. Luminaire according to one of claims 1 to 12 having a ballast (6) fixed to the bottom part, **characterised in that** the ballast (6) has a hole for fitting (20) for a screw or other fixing to pass through in the outward direction to allow the luminaire to be mounted on a wall or a ceiling.

14. Luminaire according to claim 13 and claim 11 or 12, **characterised in that** the screening member (14) likewise has a hole for fitting (21) which is aligned to line up with the hole for fitting (20) in the ballast (6).

15. Luminaire according to claim 13 or 14, **characterised in that** the bottom part has, in alignment with the hole for fitting (20), a preformed opening for passage-through (18) and a receptacle (24) for a sealing member (26).

16. Luminaire according to one of claims 1 to 15, **characterised in that** the housing is composed of plexiglass (PMMA) or a transparent polycarbonate.

## Revendications

1. Lampe (1, 31), en particulier lampe murale ou plafonnier protégé(e) contre les projections d'eau, destinée à recevoir au moins une lampe allongée à décharge gazeuse (5), comportant un boîtier fermé (4, 34) se composant d'au moins une partie inférieure transparente (3, 33) à monter de façon fixe et contenant des dispositifs électriques et d'une partie supérieure transparente (2, 32), dans laquelle la partie inférieure (3, 33) et la partie supérieure (2, 32) sont fabriquées à partir des mêmes charges de matière plastique thermoplastique et se chevauchent le long de bords périphériques sur les deux côtés, **caractérisée en ce qu'**un bord est un bord saillant (39) et l'autre bord forme un logement (11, 41) pour le bord saillant (39), dans laquelle le bord saillant (39) est, en section transversale, équipé d'un profilé creux ouvert.

2. Lampe selon la revendication 1, **caractérisée en ce que** la partie supérieure (2, 32) et la partie inférieure (3, 33) sont des pièces moulées par injection par une opération de moulage par injection.

3. Lampe selon la revendication 2, **caractérisée en ce que** la partie supérieure (2, 32) et la partie inférieure (33) sont injectées dans un moule commun, conçu de façon essentiellement symétrique par rapport à l'opération d'injection.

4. Lampe selon l'une quelconque des revendications 1 à 3, **caractérisée en ce qu'**au moins une parmi la partie supérieure (2, 32) et la partie inférieure (3, 33) est pourvue d'une rainure d'étanchéité (8, 38).

5. Lampe selon la revendication 4, **caractérisée en ce que** la partie inférieure (3, 33) ou la partie supérieure (2, 32) non pourvue de la rainure d'étanchéité (8, 38) est munie d'un bourrelet d'étanchéité (10, 40) s'engageant en complémentarité de forme dans la rainure d'étanchéité.

6. Lampe selon la revendication 4, **caractérisée en ce qu'**aussi bien la partie inférieure (3, 33) que la partie supérieure (2, 32) sont munies d'une rainure d'étanchéité destinée à recevoir un joint torique commun.

7. Lampe selon l'une quelconque des revendications 1 à 6, **caractérisée en ce que** le logement (11, 41) est en forme de U et est pourvu de la rainure d'étanchéité (8, 38) sur une branche du U située vers l'extérieur.

8. Lampe selon la revendication 7, **caractérisée en ce que** le bord saillant (39) et le logement (41) s'engagent l'un dans l'autre sous une contrainte élastique.

9. Lampe selon la revendication 7 ou 8, **caractérisée en ce que** le logement (41) comprend une chambre intermédiaire (42) fermée par le bord saillant (39) vers l'espace intérieur de la lampe et vers l'extérieur.

10. Lampe selon l'une quelconque des revendications 1 à 9, **caractérisée en ce que** la partie supérieure (2) et la partie inférieure (3) présentent chaque fois au moins une patte de saisie (12, 13), dans laquelle les deux pattes de saisie (12, 13) sont disposées sur les bords (7) l'une près de l'autre mais sont décalées en direction longitudinale sans chevauchement.

11. Lampe selon l'une quelconque des revendications 1 à 10, avec un appareil d'entrée (6) disposé à l'intérieur du boîtier, **caractérisé en ce que** l'appareil d'entrée est protégé par un élément de protection (14) par rapport au boîtier (4).

12. Lampe selon la revendication 11, **caractérisée en ce que** l'élément de protection (14) est une pièce de tôle.

13. Lampe selon l'une quelconque des revendications 1 à 12 avec un appareil d'entrée (6) fixé sur la partie inférieure, **caractérisée en ce que** l'appareil d'entrée (6) comporte un trou de montage (20) pour le passage d'une vis ou d'un autre élément de fixation vers l'extérieur en vue d'installer la lampe sur un mur ou sur un plafond.

14. Lampe selon la revendication 13 et la revendication 11 ou 12, **caractérisée en ce que** l'élément de protection (14) présente également un trou de montage (21) en alignement avec le trou de montage (20) de l'appareil d'entrée (6).

15. Lampe selon la revendication 13 ou 14, **caractérisée en ce que** la partie inférieure présente, en alignement vers le trou de montage (20), une ouverture de passage préformée (18) ainsi qu'un logement (24) pour un élément d'étanchéité (26).

16. Lampe selon l'une quelconque des revendications 1 à 15, **caractérisée en ce que** le boîtier (4) est composé d'un verre acrylique (PMMA) ou d'un polycarbonate transparent.
